(19) Europäisches Patentamt
European Patent Office
Office européen des brevets

(11) **EP 1 421 336 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(21) Anmeldenummer: **02754380.0**

(22) Anmeldetag: **13.08.2002**

(51) Int Cl.:
***G01D 3/036*** (2006.01)

(86) Internationale Anmeldenummer:
**PCT/DE2002/002628**

(87) Internationale Veröffentlichungsnummer:
**WO 2003/019116 (06.03.2003 Gazette 2003/10)**

(54) **MESSSYSTEM MIT RATIOMETRISCHEM FREQUENZAUSGANG**

MEASURING SYSTEM WITH RATIOMETRIC FREQUENCY OUTPUT

SYSTEME DE MESURE COMPORTANT UNE SORTIE DE FREQUENCE RATIOMETRIQUE

(84) Benannte Vertragsstaaten:
**AT BE BG CH CY CZ DE DK EE ES FI FR GB GR IE IT LI LU MC NL PT SE SK TR**

(30) Priorität: **18.08.2001 DE 10140617**

(43) Veröffentlichungstag der Anmeldung:
**26.05.2004 Patentblatt 2004/22**

(73) Patentinhaber: **ROBERT BOSCH GMBH**
**70442 Stuttgart (DE)**

(72) Erfinder:
• **REISCHL, Rolf**
**70499 Stuttgart (DE)**
• **BRUECKNER, Joerg**
**71069 Sindelfingen (DE)**
• **STROHRMANN, Manfred**
**76137 Karlsruhe (DE)**
• **NEUSCHELER, Marco**
**72768 Reutlingen (DE)**
• **LOISTL, Hans**
**74389 Cleebronn (DE)**
• **HAAG, Axel-Werner**
**70563 Stuttgart (DE)**

(56) Entgegenhaltungen:
**NL-A- 8 001 444     US-A- 4 626 621**

EP 1 421 336 B1

**Beschreibung**

Die Erfindung betrifft ein Messsystem gemäß dem Oberbegriff des Patentanspruchs 1, sowie ein Verfahren zur Verbesserung der Messgenauigkeit eines solchen Systems gemäß Patentanspruch 14.

Aus der US 4626621 ist bereits eine Messvorrichtung bekannt, die eine digitale Schnittstelle 1 aufweist. Messsysteme mit einem oder mehreren Sensoren sowie einer zugehörigen Auswerteeinheit sind weit verbreitet. Zur Veranschaulichung des prinzipiellen Aufbaus solcher Messsysteme wird nachfolgend ein aus der Kfz-Technik bekannter Luftmassensensor beispielhaft näher erläutert. Die Erfindung soll jedoch nicht auf Luftmassensensoren beschränkt sein.

Um den Durchsatz eines strömenden Mediums, wie beispielsweise Luft, ermitteln zu können, umfassen Motoreinspritzanlagen einen Massendurchflussmesser, der in der Literatur auch als Luftmassensensor bezeichnet wird. Bei solchen bekannten Massenstromsensoren wird das Sensorelement einem Luftstrom im Saugrohr der Brennkraftmaschine ausgesetzt. Das Sensorelement umfasst dabei einen Heizer sowie Messwiderstände, die durch den Luftstrom konvektiv gekühlt werden, wodurch eine Widerstandsänderung auftritt. Der durch das Saugrohr fließende Luftstrom kann aus der Verstimmung einer Messbrücke ermittelt werden. Der Sensor stellt schließlich ein Messsignal bereit, das an eine entfernt angeordnete Auswerteeinheit übertragen wird.

Zu diesem Zweck umfasst ein Luftmassensensor ferner eine (digitale) Schnittstelle zur Übertragung des Messsignals. Die Auswerteeinheit extrahiert die Nutzinformation aus dem empfangenen Signal und wertet sie aus.

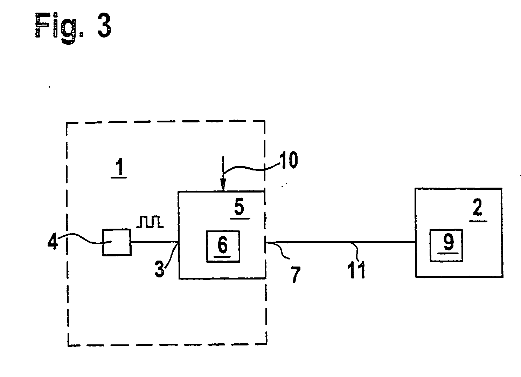

Ein typisches Beispiel eines solchen Messsystems mit digitaler Schnittstelle ist in Figur 3 schematisch dargestellt. Das gezeigte Messsystem umfasst eine Messeinrichtung 1 mit einer Schnittstelle 5 zur Übertragung digitaler Signale an eine Auswerteeinheit 2. Die Messeinrichtung 1 und die Auswerteeinheit 2 sind über ein Kabel 11 miteinander verbunden.

Die Schnittstelle 5 basiert im wesentlichen auf digitaler Schaltungstechnik und umfasst einen Takteingang 3, an dem ein Takt mit einer bestimmten Frequenz (z.B. 10 MHz) zugeführt wird, und einen Signaleingang 10, an dem das Messsignal des Sensors anliegt.

Die Schnittstelle 5 umfasst ferner eine Recheneinheit 6, welche das Messsignal verarbeitet und ein entsprechendes Signal am Signalausgang 7 der Schnittstelle 5 ausgibt.

Das Ausgangssignal ist i.d.R. ein aus dem Systemtakt und dem Messsignal abgeleitetes Signal. Somit besteht zwischen Takt - und Ausgangssignal meist ein linearer Zusammenhang.

Die Übertragung der Nutzinformation (des Messwertes) kann grundsätzlich mittels aller bekannten Übertragungsverfahren, wie z.B. Modulationsverfahren, durchgeführt werden. Die Nutzinformation kann aber auch im Tastverhältnis oder in der Frequenz bzw. Periodendauer des Ausgangssignals abgebildet sein.

Bei bekannten Systemen ist das Nutzsignal üblicherweise in der Periodendauer des Ausgangssignals enthalten, da eine solche Kodierung einerseits relativ einfach zu realisieren ist und andererseits eine sehr hohe Messgenauigkeit ermöglicht.

Der am Takteingang 3 anliegende Systemtakt wird von einem Taktgeber 4, wie z.B. einem Oszillator oder Quarz, erzeugt. Solche Oszillatoren bzw. Quarze können hohe Toleranzen bzw. Taktschwankungen aufweisen. Die Abweichung des Systemtakts wirkt sich jedoch direkt proportional auf das Ausgangssignal aus und kann somit die Messgenauigkeit stark beeinträchtigen.

Solche Messsysteme können insbesondere bei Anwendungen mit großem Messbereich die vorgegebenen Anforderungen an die Messtoleranz nur dann erfüllen, wenn hochgenaue Quarze bzw. Oszillatoren eingesetzt werden. Präzise Quarze sind jedoch entsprechend teuer und können aus Kostengründen nicht ohne weiteres integriert werden.

Es ist daher die Aufgabe der vorliegenden Erfindung, ein Messsystem zu schaffen, das mit kostengünstigen Quarzen bzw. Oszillatoren auskommt und dennoch geringe Messtoleranzen aufweist.

Gelöst wird diese Aufgabe gemäß den Merkmalen des Patentanspruchs 1 sowie durch ein Verfahren gemäß Patentanspruch 14. Weitere Ausgestaltungen der Erfindung sind Gegenstand von Unteransprüchen.

Der grundlegende Gedanke der Erfindung besteht darin, ein zusätzliches Referenzsignal aus dem Systemtakt abzuleiten und an die Auswerteeinheit zu übertragen. Dieses Referenzsignal wird dazu genutzt, einen Korrekturfaktor zu berechnen, der die Abweichung der Taktfrequenz von einer Soll-Taktfrequenz, und damit auch die Abweichung der Frequenz bzw. Periodendauer des Mess-Ausgangssignals vom nicht abweichenden Ausgangssignal wiedergibt. Dieser Korrekturfaktor wird bei der Auswertung des Ausgangssignals berücksichtigt, d.h., die Frequenzabweichung des Referenzsignals wird genutzt, um das Ausgangssignal zu korrigieren.

Die Frequenz des Referenzsignals bzw. dessen Periodendauer ist vorzugsweise um einen Faktor N kleiner als diejenige des Taktsignals und liegt insbesondere in einem Bereich von unter 100 Hz, insbesondere unter 50 Hz und vorzugsweise bei etwa 20 Hz. Das Taktsignal hat demgegenüber eine Frequenz von z.B. 10MHz.

Gemäß einer bevorzugten Ausgestaltung der Erfindung hat die Schnittstelle des Sensors einen frequenzvariablen Signalausgang, d.h., das Ausgangssignal weist in Abhängigkeit vom Messsignal eine unterschiedliche Periodendauer auf.

Gemäß einer bevorzugten Ausführungsform der Erfindung umfasst die Auswerteeinheit eine Recheneinheit, um insbesondere den korrekturfaktor zur Korrektur des Ausgangssignals aus dem Referenzsignal zu berechnen.

Das erfindungsgemäße Messsystem kann beispielsweise in der Fahrzeugtechnik zur Optimierung der Kraftstoffeinspritzung verwendet werden. In diesem Fall würde das Messsystem einen Luftmassenmesser und eine zugehörige Auswerteeinheit umfassen.

Zur Kompensation des Temperaturgangs der Sensorkennlinie umfasst der Luftmassenmesser vorzugsweise einen Temperatursensor, dessen Messwerte ebenfalls zur Auswerteeinheit übertragen werden.

Die Temperaturwerte werden vorzugsweise zusammen mit dem Referenzsignal übertragen. Gemäß einer bevorzugten Ausgestaltung der Erfindung sind die Temperaturwerte im Tastverhältnis des Referenzsignals enthalten. Die Temperaturwerte können aber auch über andere Übertragungswege oder mittels anderer Übertragungsverfahren übertragen werden.

Gemäß einer bevorzugten Ausführungsform der Erfindung ist die Periodendauer des Ausgangssignales in Schritten von <=500 ns und vorzugsweise <=200 ns quantisiert. Die Frequenz des Ausgangssignals liegt vorzugsweise zwischen etwa 1,5 und 12 kHz.

Die Übertragung von Messwerten erfolgt insbesondere nach Standardkennlinien, d.h. die Messwerte sind vorzugsweise normiert und somit unabhängig von der jeweiligen Dimensionierung des Messplatzes, wie beispielsweise dem Saugrohr eines Motors.

Die Kennlinie der Messeinrichtung ist z.B. ein Polynom n-ter Ordnung und insbesondere ein Polynom dritter Ordnung.

Die Erfindung wird nachstehend anhand der beigefügten Figuren beispielhaft näher erläutert. Es zeigen:

> Figur 1 eine Prinzipdarstellung eines Messsystems mit digitaler Schnittstelle gemäß einer Ausführungsform der Erfindung;

> Figur 2 die Verschaltung von Sensorschnittstelle und Auswerteeinheit; und

> Figur 3 eine Prinzipdarstellung eines bekannten Messsystems mit digitaler Schnittstelle.

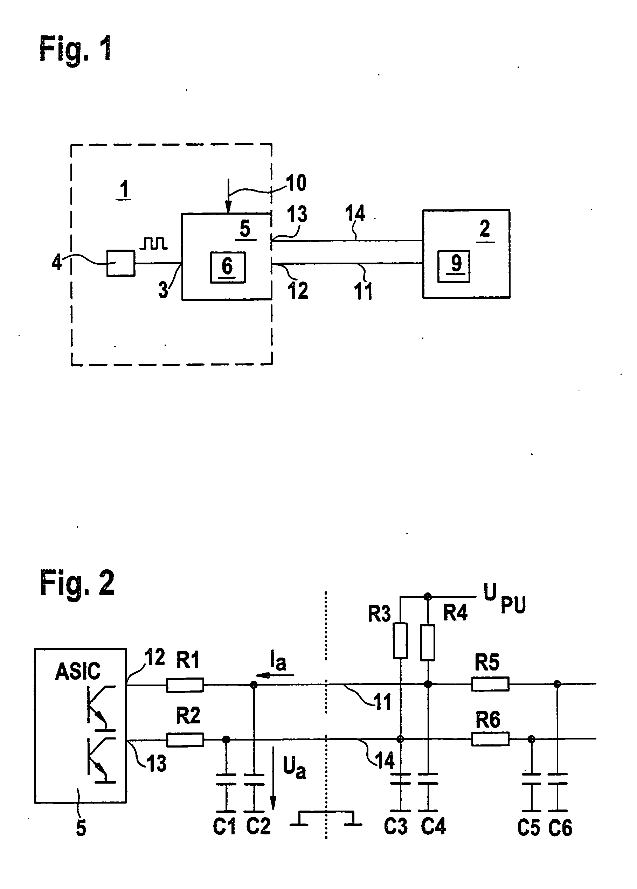

Figur 1 zeigt ein Messsystem, bestehend aus einer Messeinrichtung 1 und einer Auswerteeinheit 2, die über ein Kabel 11 miteinander verbunden sind.

Die Messeinrichtung 1 umfasst eine Schnittstelle 5 zur Übertragung digitaler Signale an die Auswerteeinheit 2, wobei die Schnittstelle 5 einen Takteingang 3 und einen Signaleingang 10 aufweist.

Der am Takteingang 3 zugeführte Takt wird von einem Taktgeber 4, wie z.B. einem Quarz oder Oszillator, erzeugt und hat eine Frequenz von etwa 10 MHz, wobei die Frequenz je nach Güte des Taktgebers relativ hohe Abweichungen bzw. Schwankungen aufweisen kann.

Die Messeinrichtung 1 basiert im wesentlichen auf digitaler Signalverarbeitung und gibt ein digitales Messsignal an die Schnittstelle 5 aus. Eine in der Schnittstelle 5 enthaltene Recheneinheit verarbeitet das zugeführte Takt- und Messsignal und berechnet daraus ein Ausgangssignal, dessen Frequenz bzw. Periodendauer vom Messsignal abhängig ist. Das Ausgangssignal ist also ein aus dem Systemtakt und dem Messwert abgeleitetes Signal mit variabler Periodendauer. Zwischen der Periodendauer des Systemtakts und des Ausgangssignals besteht insbesondere ein linearer Zusammenhang.

Die Nutzinformation, d.h. der Messwert, der in der Periodendauer bzw. Frequenz des Ausgangssignals enthalten ist, zeigt somit die gleichen Abweichungen wie das Taktsignal.

Zur Kompensation dieser Abweichungen wird ein Referenzsignal erzeugt, das aus dem Taktsignal abgeleitet ist. Das Referenzsignal wird über einen Referenzsignalausgang 13 der Schnittstelle 5 an die Auswerteeinheit 2 übertragen und hat eine relativ niedrige Frequenz von etwa 20 Hz.

Die Abweichung der Periodendauer des Referenzsignals wird bei der Auswertung des Messsignals berücksichtigt. Hierzu berechnet eine in der Auswerteeinheit 2 enthaltene Recheneinheit 9 einen Korrekturfaktor k, mit

$$k = \frac{T_{SOLL}}{T_{IST}}$$

wobei $T_{SOLL}$ der Wert einer gewünschten Periodendauer, und $T_{IST}$ die tatsächlich gemessene Periodendauer des Referenzsignals ist. Es erfolgt also eine ratiometrische Messung.

Die Recheneinheit 9 ermittelt schließlich unter Berücksichtigung des Korrekturfaktors k den eigentlichen Messwert, wie z.B. die einen Kanal durchströmende Luftmasse. Die in diesem Beispiel verwendete Kennlinie ist ein Polynom dritter Ordnung, das als Ergebnis den prozentualen Anteil einer maximalen Luftmasse $m_{max}$ liefert:

$$\frac{m}{m_{max}} = \frac{1}{a} + \frac{1}{b}\left(\frac{T_0 - T_K}{T_{norm}}\right) + \left(\frac{T_0 - T_K}{T_{norm}}\right)^3$$

wobei

> a ein absoluter Anteil der Standardkennlinie,
> b ein linearer Anteil der Standardkennlinie,
> T0 ein Kennlinienoffset,
> Tnorm der Kennlinienbereich und
> TK die korrigierte Periodendauer ist.

Dabei ergibt sich die korrigierte Periodendauer TK aus:

$$TK = k * T_M$$

wobei $T_M$ die gemessene Periodendauer ist.

Figur 2 zeigt die Verschaltung von Schnittstelle 5 und Auswerteeinheit 2 (Motorsteuerung) im Detail. Die digitale Schnittstelle 5 hat einen Takteingang 3 und einen Signaleingang 10. Die Schnittstelle 5 ist als ASIC ausgeführt und hat ferner einen Signalausgang 12 für ein erstes Messsignal (Luftmasse) und einen Signalausgang 13 für das Referenzsignal und ein zweites Messsignal (Temperatur).

Die beiden Signalausgänge 12, 13 sind jeweils mit einem Widerstand R1, R2 und einer gegen Masse geschalteten Kapazität C1, C2 abgeschlossen. Dabei dienen die Kapazitäten C1, C2 zur Ableitung hochfrequenter Störanteile, insbesondere zur Einhaltung von EMV-Vorschriften.

Das Messsignal zur Bestimmung der Luftmasse wird über die Leitung 11 und das Messsignal zur Bestimmung der Temperatur über die Leitung 14 an die Motorsteuerung übertragen.

Die Auswertung der übertragenen Signalinformation erfolgt nach normierten Standardkennlinien, so dass die Motorsteuerung durch definierte Rechenoperationen die physikalischen Werte für Luftmasse und Temperatur ermitteln kann.

Die Motorsteuerung umfasst ferner eine Pullup-Schaltung zur Erzeugung eines High-Pegels. Die Pullup-Schaltung umfasst Widerstände R3 bzw. R4, deren einer Anschluss jeweils mit einer Übertragungsleitung 11, 14 verbunden ist, und deren anderer Anschluss an einer Versorgungsspannung $U_{PU}$ angeschlossen ist.

Zur Entstörung der Leitungen 11, 14 sind wiederum gegen Masse geschaltete Kapazitäten C3, C4 vorgesehen.

Weiterhin umfasst die Motorsteuerung für jede Leitung 11, 14 einen RC-Tiefpass zum Schutz eines nachgeschalteten Controllers (nicht gezeigt). Die RC-Tiefpässe umfassen Widerstände R5, R6 und Kapazitäten C5, C6.

Die Schaltflanken der Messeinrichtung sind in der Anstiegs - und Abfallzeit begrenzt, wobei die Anstiegszeit in erster Linie durch die Pullup-Schaltung in der Motorsteuerung bestimmt wird.

Die Endstufe der Messeinrichtung.ist gegen die üblichen Umwelteinflüsse, wie ESD, EMV-Einstrahlung, Störimpulse usw. geschützt und sollte auch Fehlbedienungen, wie z.B. Kurzschlüsse, überstehen können.

Bezugszeichenliste

| 1 | Messeinrichtung |
| 2 | Auswerteeinheit |
| 3 | Takteingang |
| 4 | Taktgeber |
| 5 | Schnittstelle |
| 6 | Recheneinheit |
| 7 | Signalausgang |
| 8 | Referenzsignalausgang |
| 9 | Recheneinheit |
| 10 | Signaleingang |
| 11 | Kabel |
| 12 | Signalausgang |
| 13 | Referenzsignalausgang |
| 14 | Kabel |
| R1-R6 | Widerstände |
| C1-C6 | Kapazitäten |

**Patentansprüche**

1. Messeinrichtung (1) mit einer digitalen Schnittstelle (5), wobei die Schnittstelle (5)

   - einen Takteingang (3), an dem ein Taktgeber (4) mit einem Taktsignal angeschlossen ist, aufweist,
   - einen Signaleingang (10) aufweist, an dem ein Messsignal anliegt,
   - eine Recheneinheit (6) aufweist, die ein aus dem Taktsignal und dem Messsignal abgeleitetes Ausgangssignal erzeugt, wobei das Messsignal in dem Ausgangssignal in einer Frequenz bzw. Periodendauer oder einem Tastverhältnis abgebildet ist und
   - einen Signalausgang (12) aufweist, an dem das Ausgangssignal zur Übertragung an eine Auswerteeinheit (2) ausgegeben wird, wobei die Schnittstelle (5) einen weiteren Signalausgang (13) aufweist, an dem ein aus dem Taktsignal abgeleitetes Referenzsignal ausgegeben wird, wobei das Referenzsignal eine Abweichung des Taktsignals von einer Soll-Taktfrequenz wiedergibt.

2. Messeinrichtung nach Anspruch 1, wobei die Frequenz des Referenzsignals um einen Faktor N kleiner ist als diejenige des Taktsignals.

3. Messeinrichtung nach einem der vorhergehenden Ansprüche, wobei die Messeinrichtung (1) einen zweiten Sensor aufweist.

4. Messeinrichtung nach Anspruch 3, wobei die Messwerte des zweiten Sensors zusammen mit dem Referenzsignal übertragen werden.

5. Messeinrichtung nach Anspruch 4, wobei der Messwert des zweiten Sensors im Tastverhältnis des Referenzsignals enthalten ist.

**6.** Messeinrichtung nach einem der vorhergehenden Ansprüche, wobei die Messeinrichtung (1) ein Luftmassenmesser ist.

**7.** Messeinrichtung nach einem der vorhergehenden Ansprüche, wobei die Periode des Ausgangssignals in Schrittweiten von <=500 ns, insbesondere <=200 ns quantisiert ist.

**8.** Messeinrichtung nach einem der vorhergehenden Ansprüche, wobei die Frequenz des Referenzsignals <100 Hz, insbesondere <50 Hz und vorzugsweise ungefähr 20 Hz beträgt.

**9.** Messeinrichtung nach einem der vorhergehenden Ansprüche, wobei die Frequenz des Ausgangssignals zwischen 1,5 und 12 kHz liegt.

**10.** Auswerteeinheit (2) zur Zusammenarbeit mit einem Messeinrichtung (1) nach einem der vorhergehenden Ansprüche, wobei eine Recheneinheit (9) vorgesehen ist die aus dem Ausgangssignal der Messeinrichtung (1) den Messwert ermittelt und dabei einen Korrekturfaktor berücksichtigt der aus dem Referenzsignal ermittelt ist.

**11.** Verfahren zur Korrektur des Ausgangssignals einer Messeinrichtung mit einer digitalen Schnittstelle, der ein Mess- sowie ein Taktsignal zugeführt wird, **gekennzeichnet durch** folgende Schritte:

- Erzeugen eines aus dem Taktsignal und dem Messsignal abgeleiteten Ausgangssignals und Übertragen des Ausgangssignals an eine Auswerteeinheit (2) wobei das Messsignal in dem Ausgangssignal in einer Frequenz bzw. Periodendauer oder einem Tastverhältnis abgebildet ist;
- Erzeugen eines aus dem Taktsignal abgeleiteten Referenzsignals und Übertragen des Referenzsignals an die Auswerteeinheit (2) wobei das Referenzsignal eine Abweichung des Taktsignals von einer Soll-Taktfrequenz wiedergibt;
- Auswerten des Ausgangssignals, wobei Abweichungen des Ausgangssignals mit Hilfe des Referenzsignals korrigiert werden.

**Claims**

**1.** Measuring device (1) having a digital interface (5), wherein the interface (5)

- has a clock input (3) to which a clock generator (4) having a clock signal is connected,
- has a signal input (10) to which a measurement signal is applied,
- has a computation unit (6) which produces an output signal that is derived from the clock signal and the measurement signal, wherein the measurement signal is mapped in the output signal in a frequency or period duration or a duty ratio, and
- has a signal output (12) at which the output signal is output for transmission to an evaluation unit (2), wherein the interface (5) has a further signal output (13), at which a reference signal that is derived from the clock signal is output, wherein the reference signal reproduces a deviation in the clock signal from a setpoint clock frequency.

**2.** Measuring device according to Claim 1, wherein the frequency of the reference signal is lower by a factor N than that of the clock signal.

**3.** Measuring device according to either of the preceding claims, wherein the measuring device (1) has a second sensor.

**4.** Measuring device according to Claim 3, wherein the measured values from the second sensor are transmitted together with the reference signal.

**5.** Measuring device according to Claim 4, wherein the measured value from the second sensor is contained in the duty ratio of the reference signal.

**6.** Measuring device according to one of the preceding claims, wherein the measuring device (1) is a mass air flow meter.

**7.** Measuring device according to one of the preceding claims, wherein the period of the output signal is quantized in step sizes of <=500 ns, particularly <=200 ns.

**8.** Measuring device according to one of the preceding claims, wherein the frequency of the reference signal is <100 Hz, particularly <50 Hz and preferably approximately 20 Hz.

**9.** Measuring device according to one of the preceding claims, wherein the frequency of the output signal is between 1.5 and 12 kHz.

**10.** Evaluation unit (2) for cooperation with a measuring device (1) according to one of the preceding claims, wherein a computation unit (9) is provided which ascertains the measured value from the output signal from the measuring device (1) and in so doing takes account of a correction factor which has been ascertained from the reference signal.

**11.** Method for correcting the output signal from a measuring device having a digital interface to which a measurement signal and clock signal are supplied, **characterized by** the following steps:

- an output signal that is derived from the clock signal and the measurement signal is produced and the output signal is transmitted to an evaluation unit (2), wherein the measurement signal is mapped in the output signal in a frequency or period duration or a duty ratio;
- a reference signal that is derived from the clock signal is produced and the reference signal is transmitted to the evaluation unit (2), wherein the reference signal reproduces a deviation in the clock signal from a setpoint clock frequency;
- the output signal is evaluated, wherein deviations in the output signal are corrected by using the reference signal.

**Revendications**

**1.** Dispositif de mesure (1) comprenant une interface numérique (5), l'interface (5)

- présentant une entrée d'horloge (3) à laquelle est raccordé un générateur d'horloge (4) avec un signal d'horloge,
- présentant une entrée de signal (10) à laquelle est appliqué un signal de mesure,
- présentant une unité de calcul (6) qui génère un signal de sortie dérivé du signal d'horloge et du signal de mesure, le signal de mesure étant représenté dans le signal de sortie dans une fréquence ou une durée de période ou encore un rapport cyclique et
- présentant une sortie de signal (12) sur laquelle est délivré le signal de sortie en vue de la transmission à une unité d'interprétation (2), l'interface (5) présentant une sortie de signal (13) supplémentaire sur laquelle est délivré un signal de référence dérivé du signal d'horloge, le signal de référence restituant un écart entre le signal d'horloge et une fréquence d'horloge de consigne.

**2.** Dispositif de mesure selon la revendication 1, la fréquence du signal de référence étant inférieure d'un facteur N à celle du signal d'horloge.

**3.** Dispositif de mesure selon l'une des revendications précédentes, le dispositif de mesure (1) présentant un deuxième capteur.

**4.** Dispositif de mesure selon la revendication 3, les valeurs mesurées du deuxième capteur étant transmises conjointement avec le signal de référence.

**5.** Dispositif de mesure selon la revendication 4, la valeur mesurée du deuxième capteur étant incluse dans le rapport cyclique du signal de référence.

**6.** Dispositif de mesure selon l'une des revendications précédentes, le dispositif de mesure (1) étant un appareil de mesure de la masse d'air.

**7.** Dispositif de mesure selon l'une des revendications précédentes, la période du signal de sortie étant quantifiée en largeurs de pas <= 500 ns, notamment <= 200 ns.

**8.** Dispositif de mesure selon l'une des revendications précédentes, la fréquence du signal de référence étant < 100 Hz, notamment < 50 Hz et de préférence approximativement égale à 20 Hz.

**9.** Dispositif de mesure selon l'une des revendications précédentes, la fréquence du signal de sortie étant comprise entre 1,5 et 12 kHz.

**10.** Unité d'interprétation (2) pour interagir avec un dispositif de mesure (1) selon l'une des revendications précédentes, une unité de calcul (9) étant prévue, laquelle détermine la valeur mesurée à partir du signal de sortie du dispositif de mesure (1) et tient ici compte d'un facteur de correction qui est déterminé à partir du signal de référence.

**11.** Procédé de correction du signal de sortie d'un dispositif de mesure comprenant une interface numérique à laquelle est acheminé un signal de mesure ainsi qu'un signal d'horloge, **caractérisé par** les étapes suivantes :

- génération d'un signal de sortie dérivé du signal d'horloge et du signal de mesure et transmission du signal de sortie à une unité d'interprétation (2), le signal de mesure étant représenté dans le signal de sortie dans une fréquence ou une durée de période ou encore un rapport cyclique ;
- génération d'un signal de référence dérivé du signal d'horloge et transmission du signal de référence à l'unité d'interprétation (2), le signal de référence restituant un écart entre le signal d'horloge et une fréquence d'horloge de consigne ;
- interprétation du signal de sortie, les écarts du signal de sortie étant corrigés à l'aide du signal de référence.

**Fig. 1**

**Fig. 2**

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4626621 A